# EUROPÄISCHE PATENTANMELDUNG

(11) **EP 2 639 754 A1**
(43) Veröffentlichungstag der Anmeldung: **18.09.2013**
(21) Anmeldenummer: 13001265.1
(22) Anmeldetag: 13.03.2013
(51) Int. Cl.: G06Q 10/08

(54) **Verfahren und Vorrichtung zur Erfassung eines Materialflusses aus Einzelmengen**

(30) Priorität: 16.03.2012 DE 102012005186
(71) Anmelder: TPA Gesellschaft für Qualitätssicherung und Innovation GmbH, 50679 Köln (DE)
(72) Erfinder: Mai, Gunther, D-75438 Knittlingen (DE); Schmidberger, Christoph, D-70176 Stuttgart (DE); Krämer, Linda, D-70565 Stuttgart (DE); Grieser, Patrick, D-71069 Sindelfingen (DE); Brummer, Falk, D-70619 Stuttgart (DE)
(74) Vertreter: Wasmuth, Rolf

(57) **Zusammenfassung**

Die Erfindung betrifft eine Vorrichtung und ein Verfahren zur Erfassung eines Materialflusses aus Einzelmengen, die per Lieferfahrzeug (2) zu variablen Zeitpunkten an einem Verbrauchsort (3) angeliefert werden, bestehend aus einer elektronischen Zentraleinheit (12) zur Erfassung und Verarbeitung von erfassten Ist-Daten, wobei die Zentraleinheit (12) mit einer Erfassungseinheit (30, 40) für das anliefernde Lieferfahrzeug (2) und mit einer Leseeinheit (14) für ein das Material ausweisende Dokument (26) verbunden ist. Die Zentraleinheit (12) und die Leseeinheit (14) sind in einem gemeinsamen Gehäuse (5) angeordnet, wobei die Leseeinheit (14) von einer Frontplatte (15) des Gehäuses (5) aus zugänglich ist. Über eine Ausgabeeinheit (11) sind die aktuellen Ist-Zeit-Daten der gelieferten Einzelmengen und die Zeitpunkte der Lieferungen in einer Auswertung darstellbar.

## Beschreibung

Die Erfindung betrifft eine Vorrichtung zur Erfassung eines Materialflusses aus Einzelmengen sowie ein Verfahren zur Erfassung eines Materialflusses aus Einzelmengen.

Werden am Verbrauchsort einer Flächenbaustelle oder Linienbaustelle größere Materialmengen benötigt, so werden diese meist in Einzelmengen angeliefert und zeitnah verbaut. So müssen z. B. Betonierarbeiten in einem Zug fertiggestellt werden, auch wenn die Gesamtmenge des einzubauenden Betons aus vielen Einzelmengen besteht. Es muss daher sichergestellt sein, dass die Zulieferung der Einzelmengen kontinuierlich erfolgt, so dass die Arbeiten ohne Unterbrechung ausgeführt werden können.

Auch beim Einbau von Asphalt im Straßenbau ist eine zeitgenaue, kontinuierliche Anlieferung des Asphalts für den Asphaltfertiger sicherzustellen. Es ist bekannt, den Zeitpunkt des Andockens des LKWs zum Liefern einer Einzelmenge in den Asphaltfertiger als auch das Abdocken des LKWs vom Asphaltfertiger händisch vom Polier oder Einweiser in ein vorgegebenes Papierformular einzutragen. Der mit der Lieferung der Einzelmenge auszuhändigende Lieferschein wird ebenfalls vom Polier oder Einweiser entgegengenommen, zur Datenerfassung manuell ausgewertet und erfasst. Dieses ist umständlich und unwirtschaftlich, da Formular, Stift und eine Uhr ständig griffbereit sein müssen und darauf zu achten ist, dass alle Daten lückenlos erfasst werden, um eine verwertbare Auswertung der erfassten Daten zu ermöglichen. Die Auswertung selbst ist aufwändig und erfolgt meist erst am Ende eines Arbeitstages und somit nicht zeitnah; so kann z. B. ein weiteres Lieferfahrzeug aufgrund zu langer Rundenzeiten oft erst zu spät angefordert werden, was eine verzögerte Optimierung der Einbauleistung oder Bauabläufe ermöglicht. In der Praxis treten zudem vermehrt Erfassungsfehler auf, die zu falschen Mengen und Zeiten führen, so dass zum Beispiel eine weitere Einzelmenge angefordert wird, obwohl die gelieferten Einzelmengen bereits die projektierte Einbaumenge abdecken. Auch können in händisch auf der Baustelle oder am Ende des Arbeitstages durchgeführten Auswertungen der erfassten Daten Berechnungsfehler auftreten, so dass Störungen im weiteren Baufortschritt nicht ausgeschlossen werden können, die der Wirtschaftlichkeit des Bauablaufs entgegenstehen.

Der Erfindung liegt die Aufgabe zugrunde, eine Vorrichtung und ein Verfahren zur mengenmäßigen und zeitlichen Erfassung eines Materialflusses aus Einzelmengen anzugeben, um zeitnah sowohl die angelieferte und eingebaute Materialmenge feststellen zu können und auch die Verweilzeiten der Lieferfahrzeuge an der Baustelle zu überwachen.

Eine erfindungsgemäße Vorrichtung zur Erfassung eines Materialflusses aus Einzelmengen, die per Lieferfahrzeug an einen Verbrauchsort angeliefert werden, besteht aus einer elektronischen Zentraleinheit zur Erfassung und Verarbeitung von Ist-Daten, wobei die Zentraleinheit mit einer Erfassungseinheit für das anliefernde Lieferfahrzeug und mit einer Leseeinheit für ein das Material ausweisendes Dokument verbunden ist. Die Zentraleinheit und die Leseeinheit sind in einem gemeinsamen, stabilen Gehäuse angeordnet, wobei die Leseeinheit von einer Frontplatte des Gehäuses aus zugänglich ist. Ferner ist eine Ausgabeeinheit vorgesehen, über die aktuelle Ist-Zeit-Daten wie Mengen, Anlieferzeiten, Zeitspannen und dgl. darstellbar sind, die vorzugsweise von der Zentraleinheit durch Auswertung ermittelt wurden.

Es kann zweckmäßig sein, die erfassten Ist-Daten über eine Schnittstelle drahtgebunden oder drahtlos (WLAN, Bluetooth oder andere geeignete Funktechnologien) weiterzugeben, z. B. an eine planende Funktionseinheit in einem fernen Büro; durch den Datenfluss der Datenübermittlung können sowohl eine Kontrolle des Baufortschritts, des Fuhrparks usw. in einem beliebigen Büro als auch eine dem Baufortschritt angepasste Zeitplanung für weitere Baufortschritte ausgeführt werden. Es kann eine unmittelbare Abrechnung der eingebauten Materialien erfolgen oder auch nur eine zeitnahe Dokumentation umgesetzt werden.

Ein an der Baustelle ankommendes Lieferfahrzeug wird durch einen abzuspeichernden Zeitstempel erfasst, wodurch das Lieferfahrzeug z. B. mit einer Kennnummer oder seinem Kennzeichen am System angemeldet wird. Mit oder nach Lesen des Dokumentes mit den Daten der Lieferung über die Ausgabeeinheit wird ein zweiter Zeitstempel gesetzt, wonach zeitaktuell die an der Baustelle gelieferte Gesamtmenge abrufbar ist, um z. B. zu überprüfen, ob die benötigte Gesamtmenge erreicht ist oder weitere Lieferfahrzeuge mit Einzelmengen bestellt werden müssen. So steht die für einen Baufortschritt notwendige Materialmenge "just in time" zur Verfügung.

Die Leseeinheit für ein Dokument besteht vorzugsweise aus einem Dokumentenscanner, der über eine Texterkennung die in dem Dokument eingetragenen Daten der gelieferten Einzelmenge erkennt und - unter Hinzufügen eines Zeitstempels - zur Weiterverarbeitung der Zentraleinheit übermittelt.

Alternativ kann als Leseeinheit eine Digitalkamera vorgesehen sein, die das vor einem Fenster positionierte Dokument erfasst und elektronisch an die Zentraleinheit weitergibt.

Zweckmäßig ist für die gelesenen Dokumente im Gehäuse eine an die Leseeinheit anschließende Aufnahme vorgesehen, in welcher die gelesenen Dokumente in der zeitlichen Reihenfolge ihres Lesens abgelegt werden.

Vorteilhaft ist die elektronische Zentraleinheit mit einem Signaltaster verbunden, insbesondere drahtlos verbunden, wobei durch Drücken des Signaltasters ein Zeitstempel generiert wird, welcher dem gerade aktiven Lieferfahrzeug zugeordnet wird. Der Zeitstempel wird dabei zweckmäßig durch die Zentraleinheit generiert.

Das Gehäuse der Vorrichtung umfasst vorteilhaft einen Bildschirm als Ausgabeeinheit, wobei insbesondere ein berührungsempfindlicher Bildschirm zweckmäßig ist, der zugleich als Eingabeeinheit genutzt werden kann.

In der Praxis kann der Fahrer eines Lieferfahrzeugs oder der Einweiser an der Baustelle mit Ankunft des Fahrzeugs an der Baustelle eine Kennnummer und/oder dessen Kennzeichen an der Zentraleinheit eingeben, z. B. über den Eingabebildschirm oder eine dafür vorgesehene Hardware-Tastatur. Es kann auch zweckmäßig sein, z. B. die Kennnummer, das Kennzeichen oder andere Identifikationsmerkmale des Fahrzeugs drahtlos über Funk oder eine optische Erkennung zu erfassen, z. B. wenn das Lieferfahrzeug in einen Empfangsbereich bzw. in einen Erfassungsbereich einfährt. Es wird ein erster Zeitstempel als Ankunftszeit in der Zentraleinheit generiert und abgespeichert. Mit Einlesen des Lieferscheins (Dokument) wird ein zweiter Zeitstempel als Andockzeit des Fahrzeugs an den Fertiger am Verbrauchsort generiert und abgespeichert. Das Abdocken des Fahrzeugs von dem Fertiger wird durch Drücken des Signaltasters erfasst, wobei wiederum ein Zeitstempel generiert und abgespeichert wird. Das Ausfahren bzw. Verlassen der Baustelle wird vom System generiert, z. B. durch Aufsummieren einer definierten, vorgegebenen Zeitspanne auf den Zeitstempel des Abdockens, und dieser generierte Zeitstempel als der Zeitpunkt des Verlassens der Baustelle abgespeichert. Es kann auch eine getrennte Erfassung des Verlassens der Baustelle vorgesehen sein, z. B. eine Funkerfassung oder optische Erfassung beim Verlassen eines Erfassungsbereichs. In der Zentraleinheit werden alle gespeicherten Daten einer Auswertung zugeführt, um z. B. die an der Baustelle angelieferte Gesamtmenge, die Aufenthaltsdauer eines Fahrzeugs an der Baustelle, die Rundenzeit eines Lieferfahrzeugs und die Zeitspanne, die ein Lieferfahrzeug an den Fertiger angedockt ist, zu berechnen und auszugeben.

Für eine erhöhte Mobilität kann vorgesehen sein, dass die Zentraleinheit drahtlos mit einer Ausgabeeinheit und/oder Eingabeeinheit verbunden ist, insbesondere mit einer Anzeigeeinheit in Form eines Touch Pads.

In vorteilhafter Weiterbildung der Erfindung stehen mehrere erfindungsgemäße Vorrichtungen über eine drahtlose Kommunikationseinrichtung miteinander in Verbindung. Die an verschiedenen Orten der verschiedenen Vorrichtungen erzeugten Zeitstempel und erfassten Daten können so in einfacher Weise auf alle Vorrichtungen verteilt werden, so dass an jeder Vorrichtung alle Daten abrufbar sind.

Ein Verfahren zur Erfassung eines Materialflusses aus Einzelmengen, die über Lieferfahrzeuge an einem Verbrauchsort zur zeitnahen Verwendung angeliefert werden, gibt Anspruch 10 wieder. Mit dem erfindungsgemäßen Verfahren wird der Dokumentationsaufwand auf der Baustelle erheblich reduziert und dennoch eine Auswertung der Einbauleistung in Echtzeit ohne zusätzlichen Arbeitsaufwand gewährleistet. Die Überwachung der Tagesleistung wie auch die Planung folgender Einbautage kann frühzeitig unter Berücksichtigung der ermittelten Ist-Daten im Abgleich mit den Soll-Daten erfolgen.

Die Ankunft eines Lieferfahrzeugs an einer Baustelle ohne Einfahrportal (Linien-Baustelle) kann von dessen Fahrer oder einem an der Baustelle tätigen Einweiser durch Eingabe einer Kennnummer wie einer zugewiesenen Fahrzeugnummer und/oder auch des Fahrzeugkennzeichens an der Zentraleinheit eingegeben werden, z. B. über einen Eingabebildschirm oder eine dafür vorgesehene Hardware-Tastatur. In der Zentraleinheit wird darauf ein erster Zeitstempel als Ankunftszeit des Fahrzeugs an der Baustelle generiert und abgespeichert. Es kann auch zweckmäßig sein, z. B. die Kennnummer, das Kennzeichen oder andere Identifikationsmerkmale des Fahrzeugs über Funk oder eine optische Erkennung drahtlos zu erfassen, z. B. bei Einfahrt in einen Funk-Empfangsbereich oder einen optischen Erfassungsbereich. Der Empfangsbereich und/oder optische Erfassungsbereich kann ein definierter Abstandsbereich um den Fertiger sein.

Bei einer Baustelle mit einem Einfahrportal kann die Ankunft des Lieferfahrzeugs an der Baustelle und/oder das Ausfahren des Lieferfahrzeugs aus der Baustelle am Portal selbst erfasst werden, vorteilhaft elektronisch berührungslos erfasst werden, insbesondere über eine optische Bilderkennung.

Insbesondere kann vorgesehen sein, dass die Ankunft an der Baustelle und/oder das Ausfahren des Lieferfahrzeugs aus der Baustelle durch Betätigung eines Tasters an der Zentraleinheit selbst und/oder an einem Einfahrportal erfasst und mit einem Zeitstempel versehen wird. Der Zeitstempel wird dabei zweckmäßig von der Zentraleinheit erzeugt. Mit einem Signaltaster kann auch das Abdocken des Lieferfahrzeugs von dem Fertiger erfasst werden.

Die die gelieferten Einzelmengen ausweisenden Dokumente werden Lieferfahrzeug für Lieferfahrzeug einem Lesegerät zugeführt und am Ende des Lesevorgangs in einer Aufnahme im Gehäuse der Vorrichtung manipulationsgeschützt abgelegt. Das Ablegen erfolgt in der zeitlichen Reihenfolge des Lesens, so dass eine chronologische Reihenfolge der Lieferscheine gewährleistet bleibt.

Weitere Merkmale der Erfindung ergeben sich aus den weiteren Ansprüchen, der Beschreibung und der Zeichnung, in der ein Ausführungsbeispiel der Erfindung dargestellt ist. Es zeigen:
- Fig. 1: in schematischer Darstellung eine Vorrichtung zur Erfassung von Liefermengen an Materialien,
- Fig. 2: in Draufsicht eine schematische Darstellung einer Flächenbaustelle,
- Fig. 3: in Draufsicht eine schematische Darstellung einer Linienbaustelle,
- Fig. 4: eine beispielhafte Ansicht einer von der Zentraleinheit erzeugten optischen Ausgabe,
- Fig. 5: eine schematische Darstellung einer Vorrichtung mit einer Digitalkamera zur Erfassung von Materialmengen,
- Fig. 6: eine perspektivische Darstellung eines konstruktiven Ausführungsbeispiels einer Vorrichtung zur Erfassung von Materialmengen.

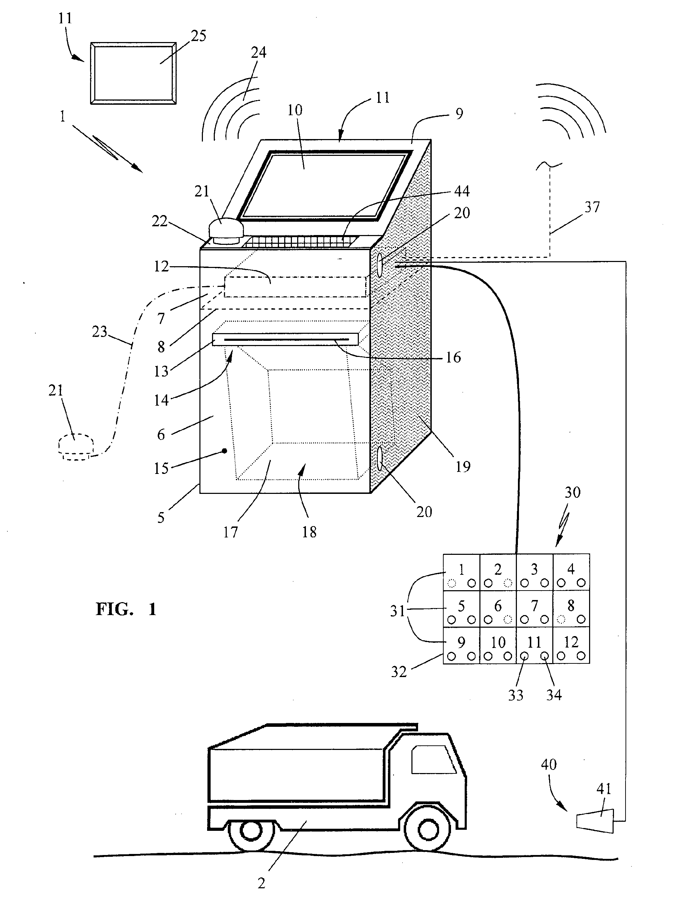

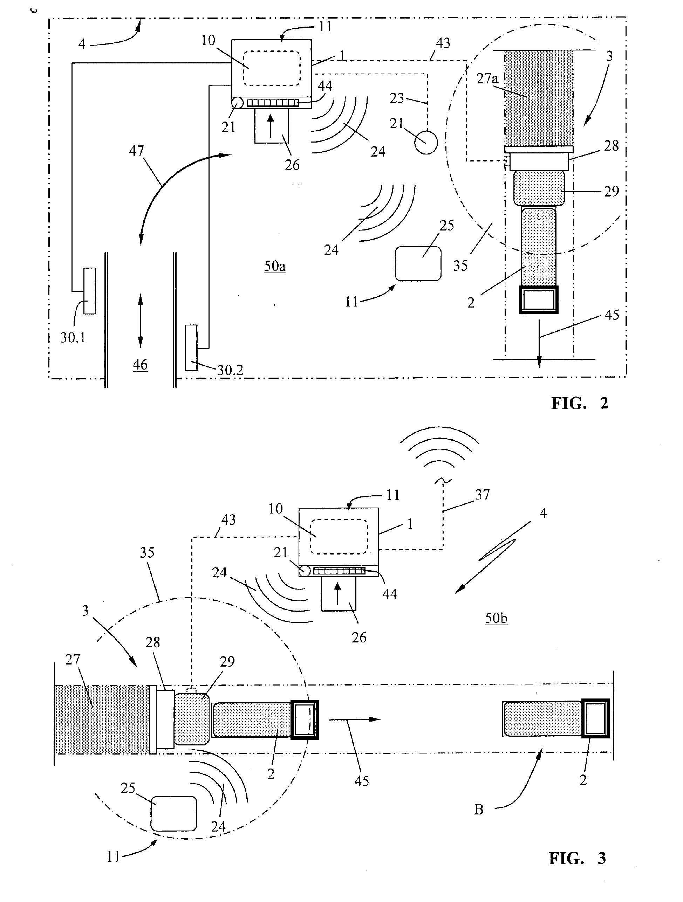

In Fig. 1 ist mit 1 eine Vorrichtung bezeichnet, die zur Erfassung von an einen Verbrauchsort 3 (Fig. 2, 3) angelieferten Einzelmengen bestimmt ist. Die Einzelmengen an Materialien werden durch ein Lieferfahrzeug, z. B. ein Kraftfahrzeug 2 an die Baustelle 4 (Fig. 2, 3) des Verbrauchsortes 3 angeliefert.

Im gezeigten Ausführungsbeispiel nach Fig. 1 umfasst die Vorrichtung ein Gehäuse 5, welches durch einen Boden 8 in einen unteren Gehäuseraum 6 und einen oberen Gehäuseraum 7 aufgeteilt ist. Der obere Gehäuseraum 7 ist mit einem im Ausführungsbeispiel nach Fig. 1 pultförmigen Dach 9 versehen, in dem ein Bildschirm 10 als Anzeigeeinheit 11 eingelassen ist. Der Bildschirm 10 ist vorzugsweise ein berührungsempfindlicher Bildschirm (Touchpad) und dient somit gleichzeitig als Eingabeeinheit. Vorteilhaft kann auch eine Hardware-Tastatur 44 oder ein Laptop als Eingabeeinheit vorgesehen sein.

Bevorzugt ist der Bildschirm 10 ein Flüssigkristallbildschirm (LCD-Bildschirm oder dgl.).

Im oberen Gehäuseraum 7 ist eine elektronische Zentraleinheit 12 aufgenommen, die im gezeigten Ausführungsbeispiel als PC ausgeführt ist. Die elektronische Zentraleinheit 12 besteht somit im Wesentlichen aus einem Mikroprozessor, einem Arbeitsspeicher, einer Festplatte, einer Grafikkarte für die Anzeigeeinheit 11 sowie Eingängen für Peripheriegeräte, die nachfolgend beschrieben werden und/oder Ausgänge für eine weiterführende drahtgebundene oder drahtlose Datenkommunikation, z. B. eine Schnittstelle 37.

Im unteren Gehäuseraum 6 ist eine Leseeinheit 14 vorgesehen, die im Ausführungsbeispiel nach Fig. 1 als Dokumentenscanner 13 ausgeführt ist und - bevorzugt an der Frontplatte 15 des Gehäuses 5 - derart festgelegt ist, dass die Leseeinheit 14, insbesondere ein Zuführschlitz 16 für ein einzulesendes Dokument, von der Frontplatte 15 aus zugänglich ist.

Die Leseeinheit 14 ist bevorzugt ein Dokumentenscanner 13, dem ein Dokument über den Zuführschlitz 16 zugeführt wird. Das Dokument wird in den Dokumentenscanner 13 eingezogen und innerhalb des Gehäuses 5 in einen Auffangkorb 17 ausgeworfen, der eine Aufnahme 18 für die eingelesenen Dokumente bildet. Da die Aufnahme 18 im unteren Gehäuseraum 6 vollständig von den Gehäusewänden umgeben ist, ist ein allseits geschlossener Raum für die Dokumente geschaffen, wodurch die Dokumente 26 (Fig. 2) manipulationssicher in dem Gehäuse 5 der Vorrichtung aufgenommen sind. Ein einmal dem Zuführschlitz 16 zugeführtes Dokument wird durch die Transportrollen des Dokumentenscanners 13 eingezogen, dabei gelesen und die gelesenen Daten an die Zentraleinheit 12 weitergeleitet. Die Ausgabe des Dokuments aus der Leseeinheit 14 erfolgt in den Auffangkorb 17 im Inneren des Gehäuses 5.

Wie in Fig. 1 gezeigt, ist das Gehäuse 5 der Vorrichtung durch eine als Tür ausgebildete Seitenwand 19 zu öffnen. Im Ausführungsbeispiel nach Fig. 1 sind bei geöffneter Seitenwand 19 sowohl die Aufnahme 18 der Dokumente als auch die elektronische Zentraleinheit 12 frei zugänglich. Die als Tür ausgebildete Seitenwand 19 ist durch zwei Schlösser 20 manipulationssicher zu verschließen.

Mit der im Gehäuse 5 aufgenommenen elektronischen Zentraleinheit 12 ist ein Taster 21 verbunden, bei dessen Drücken die Zentraleinheit 12 einen Zeitstempel generiert. Der Taster 21 ist im gezeigten Ausführungsbeispiel nach Fig. 1 auf einer oberen Pultfläche 22 des Gehäuses 5 vorgesehen; es kann zweckmäßig sein, den Taster 21 über eine Signalleitung 23 oder drahtlos an die Zentraleinheit 12 anzubinden, so dass der Taster 21 an geeigneter Stelle auf der Baustelle 4 positioniert werden kann.

Die elektronische Zentraleinheit 12 ist ferner mit einer Erfassungseinheit 30 bzw. 40 verbunden, die über geeignete Anschlüsse mit der Zentraleinheit 12 verbunden ist.

Im Ausführungsbeispiel nach Fig. 2 ist eine Flächenbaustelle 50a gezeigt, die ein ortsfestes Portal aufweist, das als Zufahrt 46 dargestellt ist. Die Erfassungseinheit 30 ist in einem ersten Ausführungsbeispiel ein Tastenfeld 32 aus Nummerntasten 31, wobei jeder Fahrer eines anliefernden Lieferfahrzeugs 2 eine ihm zugeordnete Nummerntaste 31 drücken muss, sobald er die Baustelle 4 erreicht. Entsprechend kann der Fahrer eine ihm zugeordnete Nummerntaste 31 des Tastenfeldes 32 erneut drücken, sobald er die Baustelle 4 verlässt. Mit jedem Drücken einer Nummerntaste 31 wird ein der Nummerntaste 31 zugeordneter Zeitstempel generiert und in der Zentraleinheit 12 abgespeichert.

Es kann vorteilhaft sein, an den jeweiligen Nummerntasten 31 durch optische Anzeigen 33, 34 wie LEDs oder dgl. die Ankunft an der Baustelle und das Verlassen der Baustelle anzuzeigen. Zum Beispiel kann bei Ankunft an der Baustelle eine optische Anzeige 33 aktiviert sein, während nach Verlassen der Baustelle eine optische Anzeige 34 aktiviert ist. Alternativ oder auch zusätzlich kann eine Erfassungseinheit 40 vorgesehen sein, die berührungslos das Ein- und Ausfahren der Lieferfahrzeuge an der Baustelle erfasst und an die Zentraleinheit 12 weitergibt. Neben RFID-Technik, Funktechnik oder dergleichen ist die berührungslose, optische Erkennung des Nummernschildes des Kraftfahrzeugs über eine Kamera 41 zweckmäßig, wobei die Auswertung und Nummernschilderkennung der durch die Kamera 41 erfassten Bilder in der elektronischen Zentraleinheit 12 erfolgen kann.

Wie in Fig. 1 oben links dargestellt, kann alternativ zur Anzeigeeinheit 11 bzw. dem Bildschirm 10 ein drahtlos angebundener Touchpad 25 vorgesehen sein, der sowohl als drahtlose Anzeigeeinheit 11 genutzt werden kann als auch als drahtlose Eingabeeinheit zur Steuerung der elektronischen Zentraleinheit 12. Die drahtlose Anbindung kann über ein Funknetz 24 erfolgen, z. B. über Wireless LAN, über Bluetooth oder andere Funknetze. Grundsätzlich ist auch eine Anbindung über Infrarot oder dergleichen vorteilhaft.

Anhand der schematischen Darstellung der Flächenbaustelle 50a in Fig. 2 wird das erfindungsgemäße Verfahren zur Erfassung des Materialflusses aus insbesondere zeitvariabel angelieferten Einzelmengen erläutert.

Die Flächenbaustelle 50a ist zur Erneuerung z. B. des Belags eines Parkplatzes 27a eingerichtet. Zur Erneuerung der Asphaltdecke ist ein Fertiger 28 vorgesehen, der eine Vorratsmulde 29 für den einzubauenden Asphalt aufweist. Der Fertiger 28 fährt in Pfeilrichtung 45, wobei je nach Baufortschritt die Vorratsmulde 29 mit dem einzubauenden Asphalt wieder aufzufüllen ist.

Der einzubauende Asphalt wird im Ausführungsbeispiel nach Fig. 2 durch Kraftfahrzeuge 2, nämlich Muldenkipper angeliefert, die über ein Portal wie eine Zufahrt 46 in die Baustelle 4 einfahren. In Einfahrtrichtung links ist an der Zufahrt 46 eine Erfassungseinheit 30.1 in Form des Tastenfeldes 32 nach Fig. 1 vorgesehen. Der Fahrer des einfahrenden Muldenkippers drückt die ihm zugeordnete Nummerntaste 31 (Fig. 1), wobei mit Drücken der Nummerntaste die Zentraleinheit 12 einen Zeitstempel generiert, womit die Ankunft des Kraftfahrzeugs 2 an der Flächenbaustelle 50a des Verbrauchsortes 3 erfasst ist.

Der Fahrer fährt nun in Pfeilrichtung 47 bis zur Vorrichtung 1 zur Erfassung der Liefermengen vor und führt das die anzuliefernde Einzelmenge ausweisende Dokument 26, z. B. den Lieferschein, in den Zuführschlitz 16 der als Dokumentenscanner 13 ausgebildeten Leseeinheit 14 ein. Das Dokument 26 wird in den Dokumentenscanner 13 eingezogen, gelesen und in den Auffangkorb 17 (Fig. 1) im Inneren des Gehäuses 5 (Fig. 1) ausgeworfen. Das Dokument 26 ist nun für den Fahrer des Muldenkippers manuell nicht mehr greifbar und elektronisch in der Zentraleinheit 12 aufgenommen. Alternativ kann der Fahrer auch bis zum Fertiger 28 vorfahren; der Einweiser gibt dann z. B. das Kennzeichen des anliefernden Fahrzeugs manuell in die Zentraleinheit 12 ein, z. B. über ein Touchpad 25, eine manuelle Tastatur 44 oder andere geeignete Eingabegeräte. Der ihm vom Fahrer ausgehändigte Lieferschein wird in den Einführschlitz 16 des Dokumentenscanners 13 eingeführt und eingelesen.

Mit dem Lesen des Dokumentes 26 (Lieferschein) oder nach Abschluss des Lesens wird ein weiterer Zeitstempel erzeugt, der als Zeitpunkt des Andockens des Muldenkippers an den Asphaltfertiger 28 abgespeichert wird. Nach dem Einzug des Dokuments 26 oder während dem Lesen des Dokuments 26 fährt der Fahrer des Muldenkippers sein Fahrzeug zum Entladen an die Vorratsmulde 29 des Asphaltfertigers 28 heran und entlädt sein Fahrzeug. Ist das Fahrzeug entladen, wird ein weiterer Zeitstempel durch Drücken z. B. des Tasters 21 durch den Einweiser am Asphaltfertiger 28 generiert. Alternativ kann auch vorgesehen sein, dass der Fahrer beim Zurückfahren zur Zufahrt 46 einen Taster 21 (Buzzer) an der Vorrichtung 1 selbst drückt und damit den Zeitpunkt des Abdockens vom Asphaltfertiger 28 dokumentiert. Auch dieser Zeitpunkt des Abdockens wird als Zeitstempel abgespeichert.

Zweckmäßig ist der Fertiger 28 über eine Signalleitung 43 oder drahtlos mit der Zentraleinheit 12 verbunden, um z. B. das Andocken und das Abdocken des Lieferfahrzeugs 2 der Zentraleinheit 12 anzuzeigen, so dass zu jedem Ereignis von der Zentraleinheit 12 ein Zeitstempel generiert und abgespeichert wird.

Der Fahrer verlässt nun in Pfeilrichtung 47 über die Zufahrt 46 die Baustelle 4, wobei er - wie bei der Einfahrt - die ihm zugeordnete Nummerntaste des Tastenfeldes 32 der Erfassungseinheit 30.2 niederdrückt. Nunmehr verlässt das Kraftfahrzeug 2 die Baustelle 4.

Die erfindungsgemäße Vorrichtung und das erfindungsgemäße Verfahren können auch bei anderen Typen von Baustellen genutzt werden, wie am Ausführungsbeispiel einer Linienbaustelle 50b zum Fertigen einer Straße 27 oder Erneuern des Straßenbelags einer Straße 27 in Fig. 3 wiedergegeben ist.

Der Aufbau der Baustelle 50b nach Fig. 3 entspricht im Wesentlichen dem nach Fig. 2, weshalb für gleiche Teile gleiche Bezugszeichen verwendet sind. Im Gegensatz zur Flächenbaustelle 50a nach Fig. 2 ist kein Portal für die Zufahrt und/oder Abfahrt vorgesehen, da sich der Ort der Zu- und Abfahrt mit dem Baufortschritt ändert.

Fährt der Fahrer eines Lieferfahrzeugs eine Linienbaustelle 50b entsprechend Fig. 3 an, so kann er sich zunächst in eine Wartestellung B begeben oder auch sofort den Fertiger 28 anfahren, um dessen Vorratsmulde 29 zu füllen. Ein im Bereich der Wartestellung B oder am Fertiger 28 stehender Einweiser gibt bei Ankunft des Fahrzeugs 2 eine zugeordnete Kennnummer und/oder das Kennzeichen des Lieferfahrzeugs an der Zentraleinheit 12 ein, z. B. über den Eingabebildschirm 10, eine dafür vorgesehene Hardware-Tastatur 44 oder eine drahtlose Eingabeeinheit 25. Es wird ein erster Zeitstempel als Ankunftszeit des Lieferfahrzeugs 2 an der Baustelle 4 generiert und abgespeichert. Der Fahrer händigt bei Andocken des Lieferfahrzeugs 2 an den Fertiger 28 den Lieferschein (Dokument 26) an den Einweiser aus, der diesen dem Dokumentenscanner 13 in der Vorrichtung 1 zuführt. Mit Einlesen des Lieferscheins (Dokument 26) wird ein zweiter Zeitstempel als Andockzeit des Fahrzeugs 2 an den Fertiger 28 am Verbrauchsort 3 generiert und abgespeichert. Das Abdocken des Fahrzeugs 2 von dem Fertiger 28 wird durch Drücken des Signaltasters 21 (Buzzer) erfasst, wobei wiederum ein Zeitstempel generiert und abgespeichert wird. Das Betätigen des Buzzers kann vom Fahrer oder dem Einweiser erfolgen.

Das Ausfahren bzw. Verlassen der Linienbaustelle 50b kann mangels Portal für die Zu- und Abfahrt nicht ohne Weiteres erfasst werden. Daher wird zweckmäßig das Verlassen der Baustelle vom System generiert, z. B. durch Aufsummieren einer definierten, vorgegebenen Zeitspanne von z. B. 5 min auf den Zeitstempel des Abdockens und dieser generierte Zeitstempel als der Zeitpunkt des Verlassens der Baustelle 4 abgespeichert. Die vorgegebene Zeitspanne kann bestimmt sein von der benötigten Zeit z. B. zum Reinigen der Ladefläche, zur Kontrolle des Fahrzeugs und/oder zur Fahrt zur Baustellenausfahrt usw.

Es kann auch eine andere Erfassung des Verlassens der Baustelle vorgesehen sein, z. B. eine Funkerfassung oder optische Erfassung beim Verlassen eines Erfassungsbereichs, sofern dies durch den Aufbau der Baustelle umsetzbar ist. Entsprechendes gilt auch für das Einfahren in die Baustelle, so dass berührungslos ein Zeitstempel bei der Ankunft auf der Baustelle erzeugt wird.

In der Zentraleinheit 12 werden alle gespeicherten Daten einer Auswertung zugeführt, um z. B. die an der Baustelle 4 angelieferte Gesamtmenge, die Aufenthaltsdauer eines Fahrzeugs 2 an der Baustelle (Rundenzeit eines Lieferfahrzeugs) und die Zeitspanne, die ein Lieferfahrzeug an den Fertiger 28 angedockt war, zu berechnen und auszugeben. Dabei kann es zweckmäßig sein, die erfassten und abgespeicherten Daten über eine Schnittstelle 37 drahtlos oder drahtgebunden einer oder mehreren anderen Auswerteeinheiten zur weiteren Auswertung und/oder Dokumentation zu übermitteln.

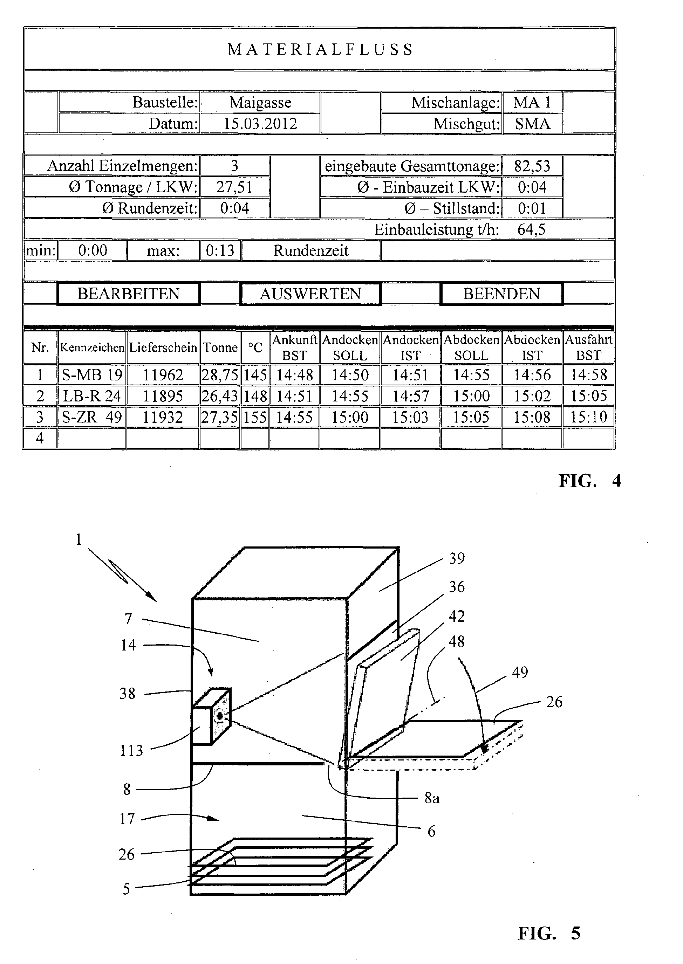

Dieser Ablauf wird gemäß der in Fig. 4 dargestellten Ausgabe an der elektronischen Zentraleinheit abgespeichert. Jede Lieferung wird mit der Nummer oder dem Kennzeichen des Fahrzeugs, der Lieferscheinnummer, der gelieferten Tonnage, der Ankunftszeit auf der Baustelle, der Andockzeit am Asphaltfertiger, der Abdockzeit vom Asphaltfertiger und der Abfahrtszeit beim Verlassen der Baustelle dokumentiert. Über die Anzeigeeinheit kann der Einweiser sofort erkennen, wie viele LKWs bereits an den Asphaltfertiger angedockt haben, welche eingebaute Gesamttonnage verbaut worden ist und welche Zeit ein Kraftfahrzeug 2 von der Ankunft auf der Baustelle 4 bis zum Verlassen der Baustelle 4 benötigt. Auf diese Weise ist ein zeitnaher Soll-Ist-Vergleich am Verbrauchsort möglich, so dass bei Abweichungen zu den zuvor festgelegten Planungsparametern rechtzeitig reagiert werden kann und/oder eine Anpassung dieser Parameter für folgende Einbautage frühzeitig erfolgen kann. Mit dem erfindungsgemäßen Verfahren ist auch eine auftretende Abweichung von einer vom System mittels Software berechneten Andockzeit zu der tatsächlichen Andockzeit zu erfassen, so dass auf Verspätungen gelieferter Einzelmengen angepasst reagiert werden kann.

Wie in den Fig. 2 und 3 gezeigt, kann ferner in einem definierten Abstandsbereich 35 um den Fertiger 28 herum ein drahtloser Empfangsbereich oder optischer Erfassungsbereich eingerichtet sein, in dem z. B. die Kennnummer, das Kennzeichen oder ein anderes Identifikationsmerkmal des Fahrzeugs 2 berührungslos erfasst und drahtlos der Zentraleinheit 12 übermittelt wird. Bei Einfahrt in den Funk-Empfangsbereich oder den optischen Erfassungsbereich und bei Verlassen des Bereichs wird ein das Ereignis protokollierender Zeitstempel generiert und in der Zentraleinheit 12 abgespeichert. So kann z. B. das An- und das Abdocken von dem Fertiger 28 ohne weitere manuelle Bedienung erfasst werden.

Im Ausführungsbeispiel nach Fig. 5 ist schematisch eine erfindungsgemäße Vorrichtung 1 mit einer Digitalkamera 113 als Leseeinheit 14 dargestellt. Ein Boden 8 trennt das Gehäuseinnere in einen unteren Gehäuseraum 6 und einen oberen Gehäuseraum 7 auf, wobei der untere Gehäuseraum 6 als Auffangkorb 17 für einzulesende Dokumente 26 dient. Die Digitalkamera 113 ist an einer Rückwand 38 des Gehäuses 5 der Vorrichtung 1 angeordnet, und zwar oberhalb des Bodens 8. In der der Digitalkamera 113 gegenüberliegenden Frontwand 39 des Gehäuses 5 ist ein Fenster 36 ausgebildet, das in der Größe dem Bildwinkel der Digitalkamera 113 entspricht. Vor dem Fenster 36 ist eine Klappe 42 vorgesehen, die im Ausführungsbeispiel nach Fig. 5 an einem unteren Rand um eine horizontale Verschwenkachse 48 schwenkbar ist. Die Klappe 42 entspricht in ihren Abmessungen denen des Fensters 36.

In der ausgeklappten Stellung (stichliert dargestellt) liegt die Klappe 42 ähnlich einer Schreibplatte vor der Frontwand 39. Der Benutzer legt das zu erfassende Dokument 26 auf die Klappe 42 auf und klappt diese um die Verschwenkachse 48 nach oben, so dass das Dokument 26 zwischen der Klappe 42 und dem Fenster 36 sicher fixiert ist. Die Digitalkamera 113 erfasst das Dokument 26 als Bild und gibt die entsprechenden digitalen Daten an die Zentraleinheit 12 zur Auswertung weiter. Wird die Klappe in Pfeilrichtung 49 zurück in die strichliert gezeichnete Lage geklappt, rutscht das Dokument 26 durch einen Schlitz 8a im Boden 8 in den Auffangkorb 17 im unteren Gehäuseraum 6, so dass das Dokument 26 für den Benutzer manuell nicht mehr zugänglich ist. Die Vorrichtung 1 ist für einen nächsten Erfassungsvorgang bereit.

Die Auslösung der Digitalkamera 113 kann über einen Stellungsschalter erfolgen, der bei hochgeklappter Klappe 42 aktiviert wird.

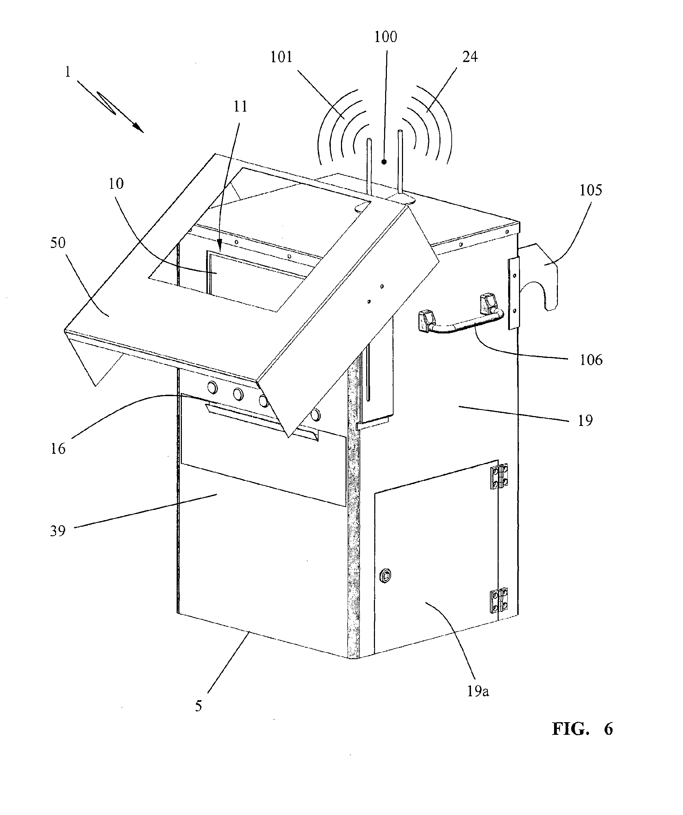

Im Ausführungsbeispiel nach Fig. 6 ist eine Vorrichtung 1 gezeigt, deren Gehäuse 5 etwa quaderförmige Gestalt hat und in der Frontwand 39 einen Zuführschlitz 16 für ein einzulesendes Dokument aufweist. In der Frontwand 39 ist ferner eine Anzeigeeinheit 11 in Form eines Bildschirms 10 vorgesehen. Die Frontwand 39 kann durch eine Schutzhaube 50 abgedeckt werden, welche lediglich die Anzeigeeinheit 11 und den Zuführschlitz 16 zugänglich lässt.

In einer Seitenwand 19 des Gehäuses 5 ist eine verschließbare Türöffnung 19a vorgesehen, durch die im Auffangkorb manipulationssicher gesammelte Dokumente entnommen werden können.

Die Vorrichtung 1 nach dem Ausführungsbeispiel in Fig. 6 weist drahtlose Kommunikationseinrichtungen 100 auf. Eine erste drahtlose Kommunikationseinrichtung ist in ein Funknetz 24 eingebunden; eine zweite Kommunikationseinrichtung 100 kann in einem anderen Funknetz 101 eingebunden sein, welche z. B. mit anderen erfindungsgemäßen Vorrichtungen 1 der Baustelle kommuniziert. Dadurch ist eine Dezentralisierung der Vorrichtungen möglich, wobei die Vorrichtungen 1 alle erfassten Daten und Zeitstempel untereinander austauschen können, so dass alle Daten der Baustelle an jeder der Vorrichtungen 1 abrufbar sind.

Das Gehäuse nach Fig. 6 der erfindungsgemäßen Vorrichtung 1 hat auf seiner Rückseite Haltebügel 105, mit denen das Gehäuse 5 der Vorrichtung 1 an einer Reling oder dgl. eingehakt werden kann. Zum Bewegen des Gehäuses 5 sind auf dessen Seitenwänden 19 Handgriffe 106 vorgesehen, die zweckmäßig klappbar sind.

## Patentansprüche

1. Vorrichtung zur Erfassung eines Materialflusses aus Einzelmengen, die per Lieferfahrzeug (2) zu variablen Zeitpunkten an einen Verbrauchsort (3) angeliefert werden, bestehend aus:
• einer elektronischen Zentraleinheit (12) zur Erfassung und Verarbeitung von Ist-Daten,
• mit einer Erfassungseinheit (30, 40) für das anliefernde Lieferfahrzeug (2),
• und mit einer Leseeinheit (14) für ein das Material ausweisende Dokument (26),
• wobei die Erfassungseinheit (30, 40) und die Leseeinheit mit der Zentraleinheit (12) verbunden sind,
• wobei die Zentraleinheit (12) und die Leseeinheit (14) in einem gemeinsamen Gehäuse (5) angeordnet sind,
• und die Leseeinheit (14) von einer Frontplatte (15) des Gehäuses (5) aus zugänglich ist,
• und mit einer Ausgabeeinheit (11), über die aktuelle Ist-Zeit-Daten der gelieferten Einzelmengen und Zeitpunkte in einer Auswertung darstellbar sind.

2. Vorrichtung nach Anspruch 1,
**dadurch gekennzeichnet, dass** die Auswertung in der Zentraleinheit (12) ausgeführt ist.

3. Vorrichtung nach Anspruch 1 oder 2,
**dadurch gekennzeichnet, dass** die erfassten Ist-Daten über eine Schnittstelle (37) an eine übergeordnete Verarbeitungseinheit übermittelbar sind.

4. Vorrichtung nach einem der Ansprüche 1 bis 3,
**dadurch gekennzeichnet, dass** die Leseeinheit (14) ein Dokumentenscanner (13) ist.

5. Vorrichtung nach einem der Ansprüche 1 bis 3,
**dadurch gekennzeichnet, dass** die Leseeinheit (14) eine Digitalkamera (113) ist.

6. Vorrichtung nach einem der Ansprüche 1 bis 5,
**dadurch gekennzeichnet, dass** im gemeinsamen Gehäuse (5) eine an die Leseeinheit (14) anschließende Aufnahme (18) für die erfassten Dokumente (26) vorgesehen ist.

7. Vorrichtung nach einem der Ansprüche 1 bis 6,
**dadurch gekennzeichnet, dass** die elektronische Zentraleinheit (12) mit einem Signaltaster (21) verbunden ist, insbesondere drahtlos verbunden ist.

8. Vorrichtung nach einem der Ansprüche 1 bis 7,
**dadurch gekennzeichnet, dass** das Gehäuse (5) einen Bildschirm (10) als Ausgabeeinheit umfasst.

9. Vorrichtung nach einem der Ansprüche 1 bis 8,
**dadurch gekennzeichnet, dass** die Zentraleinheit (12) drahtlos mit einer Ausgabeeinheit und/oder Eingabeeinheit, insbesondere einer Anzeigeeinheit (11) verbunden ist.

10. Vorrichtung nach einem der Ansprüche 1 bis 8,
**dadurch gekennzeichnet, dass** mehrere Vorrichtungen (1) über eine drahtlose Kommunikationseinrichtung (100) miteinander verbunden sind.

11. Verfahren zur Erfassung eines Materialflusses aus Einzelmengen, die in zeitlicher Folge über Lieferfahrzeuge (2) an einem Verbrauchsort (3) zur zeitnahen Verwendung angeliefert werden, wobei
• der Zeitpunkt der Ankunft des Lieferfahrzeugs (2) an der Baustelle (4) des Verbrauchsortes (3) erfasst wird,
• die Daten eines die angelieferte Einzelinenge ausweisenden Dokumentes (26) über eine Leseeinheit (14) einer elektronischen Zentraleinheit (12) zusammen mit einem Zeitstempel übermittelt werden,
• das die gelieferte Einzelmenge ausweisende Dokument (26) am Ende des Lesevorgangs in eine Aufnahme (18) manipulationsgeschützt abgelegt wird,
• die Einzelmenge an der vorgesehenen Abladestelle entladen wird,
• der Abschluss des Entladens der Zentraleinheit (12) übermittelt wird,
• der Abschluss des Entladens mit einem Zeitstempel erfasst wird,
• der Zeitstempel von der Zentraleinheit (12) erzeugt wird,
• und die so erfassten Ist-Daten ausgewertet und/oder ausgegeben werden.

12. Verfahren nach Anspruch 11,
**dadurch gekennzeichnet, dass** die Ankunft an der Baustelle (4) und/oder das Ausfahren des Lieferfahrzeugs (2) aus der Baustelle (4) elektronisch berührungslos erfasst wird, insbesondere über RFID-Technik und/oder eine optische Bilderkennung erfasst wird.

13. Verfahren nach Anspruch 11,
**dadurch gekennzeichnet, dass** die Ankunft an der Baustelle (4) und/oder das Ausfahren des Lieferfahrzeugs (2) aus der Baustelle (4) durch manuelle Eingabe an einer Erfassungseinheit (30) der Zentraleinheit (12) übermittelt, mit einem Zeitstempel erfasst und in der Zentraleinheit (12) abgespeichert wird.

14. Verfahren nach Anspruch 13,
**dadurch gekennzeichnet, dass** die Ankunft an der Baustelle (4) und/oder das Ausfahren des Lieferfahrzeugs (2) aus der Baustelle (4) durch Betätigen eines Tasters mit einem Zeitstempel erfasst und in der Zentraleinheit (12) abgespeichert wird.

15. Verfahren nach einem der Ansprüche 11 bis 14,
**dadurch gekennzeichnet, dass** das Ausfahren des Lieferfahrzeugs (2) aus der Baustelle (4) als Abschluss der Anlieferung mit einem weiteren Zeitstempel erfasst und der Zentraleinheit (12) mitgeteilt wird
